# EUROPEAN PATENT APPLICATION

(11) **EP 2 704 398 A1**
(43) Date of publication of application: **05.03.2014**
(21) Application number: 12181883.5
(22) Date of filing: 27.08.2012
(51) Int. Cl.: H04L 29/08

(54) **A method for content change notification in a cloud storage system, a corresponding cloud broker and cloud agent**

(71) Applicant: AWINGU NV, 9080 Lochristi (BE)
(72) Inventor: Pizurica, Veselin, 9052 GENT (BE)
(74) Representative: IP Hills NV

(57) **Abstract**

A method for notification of content changes across different applications that share same content in a cloud storage system comprises:
- registering at a cloud IO broker applications that require content change notification;
- informing a cloud IO agent about content for which applications registered with the cloud IO broker for content change notification;
- monitoring content changes in the cloud storage system and upon each change of a content item:
- sending a first content change notification from the cloud IO agent to each cloud IO broker that requested content change notification for that content item;
- identifying at the cloud IO broker applications registered for content change notification for that content item; and
- multicasting a second content change notification from the cloud IO broker to all applications registered for content change notification for that content item.

## Description

### Field of the Invention

The present invention generally relates to real-time notification of content changes in a cloud storage environment where different applications simultaneously share the same content.

### Background of the Invention

When content, e.g. a file, object, directory or subdirectory, is stored in a cloud storage system, a user or multiple users can use different applications on one or multiple devices to simultaneously read or change the content. Changing content in the context of the current patent application comprises creating or rendering, moving, updating or editing, copying, and deleting a file, object, directory or subdirectory stored in a cloud storage system. Such a cloud storage system is a networked pool of storage resources, e.g. web servers located in one or several data centers, operated and hosted by a third party different from the user, e.g. a data center operator. In order to enable different applications running on different devices of one or more users to have at any point in time the same presentation of a file, object, directory or subdirectory stored in such a cloud storage system, asynchronous notification of content changes is required.

The WebDAV protocol defined in Internet Engineering Task Force (IETF) RFC 4918 provides a framework for users to change content stored on a web server. The WebDAV or Web Distributed Authoring and versioning protocol is an extension of the HyperText Transfer protocol (HTTP) that facilitates collaboration between users in editing and managing documents and files stored on web servers. The most important features of the WebDAV protocol include creation, removal and querying file information. This way, the WebDAV protocol has made the web a readable and writable medium. The WebDAV protocol however does not foresee asynchronous notification in case a file has changed as a result of an action of different users of that file, or in case the same user accesses a file through different applications running on one or plural devices.

Dropbox app is an existing application that supports asynchronous notification of file changes. The Dropbox app triggers a re-synchronization protocol for file updates with the different users. Just like similar existing solutions, the Dropbox app however is limited to one particular application, i.e. Dropbox. In other words, it does not allow notification across different applications that share the same content over cloud infrastructure.

It is an objective of the present invention to provide a method and system for asynchronous notification of content changes in a cloud storage system that overcomes the drawbacks mentioned here above in relation to the prior art. More particularly, it is an objective to disclose a method and system components for asynchronous notification of content changes across different applications and platforms enabling all users that share a same content stored in a cloud storage system to have the same presentation or version of that content, irrespective of the application(s) and/or device(s) they are using to access the content.

### Summary of the Invention

According to the present invention, the above defined objectives are realized by the method for notification of content changes across different applications that share same content in a cloud storage system defined by claim 1, the method comprising:
- registering at a cloud IO broker applications that require content change notification together with an identification of respective content for which the applications require content change notification;
- the cloud IO broker informing a cloud IO agent about content for which applications registered with the cloud IO broker require content change notification;
- the cloud IO agent monitoring content changes in the cloud storage system; and
upon each change of a content item in the cloud storage system:
- sending a first content change notification from the cloud IO agent to each cloud IO broker that requested content change notification for content comprising the content item;
- identifying at the cloud IO broker applications registered for content change notification for the content item; and
- multicasting a second content change notification from the cloud IO broker to all applications registered for content change notification for content comprising the content item.

Thus, according to the present invention, all client applications that require notification of cloud content changes register with a cloud IO broker, i.e. a server that keeps track of the applications that require change notifications and the exact content for which these applications require change notification. Each cloud IO broker shall inform a cloud IO agent, i.e. an application which runs in the cloud data center, on the content for which it desires to receive change notifications. In other words, a cloud IO broker informs the cloud IO agent on the files, objects and directories for which it needs notification of content change events. The cloud IO agent will monitor the cloud storage system for content changes. Different implementations are possible. The cloud IO agent may permanently scan the registered content for changes or the cloud infrastructure may notify the cloud IO agent of each content change. Each time a file, object or directory that resides in the cloud storage system is changed by one of the devices/applications that have access to it, the cloud IO agent sends a change notification, e.g. a cloud IO event or CMUD (create, move, update or delete) event, to the relevant cloud IO brokers. Thereto, the cloud IO agent compares files, objects and directories that have changed against the files, objects and directories that were registered for change notification. Each cloud IO broker at last shall multicast the change notification, i.e. the CMUD event, to the relevant applications registered with it. The applications can reside on a single device of a single user, or they can reside on multiple devices from one or more users. It remains the clients responsibility to fetch and interpret the change notification, i.e. the CMUD event, and to render the content change appropriately.

The method according to the invention with cloud IO agent monitoring content changes and cloud IO brokers multicasting content changes to applications that register with it for this service, allows different applications across different devices and different platforms to receive asynchronous content change notifications in an open and transparent manner. As a result, all applications of all users that share content stored in a cloud storage system shall at any point in time have the same presentation or version of the shared content.

It is noticed that in the context of the WebDAV protocol and distributed file systems content is represented by a file name or directory path. In their request to the cloud IO broker, the different applications in other words have to specify the file path or directory path for which they require change notification. In case of a directory path, all changes in subdirectories and files that belong to the root directory whose directory path is specified in the request will be notified to the application. The method according to the invention however is not limited to WebDAV and distributed file systems. The same method may be applied for asynchronous change notification in object stores. All object operations in the cloud object store can be monitored and the change notification registration and change notification can be handled on object level. In that case, no propagation of the file path change is required.

Optionally, as defined by claim 2, the method for notification of content changes according to the present invention may further comprise:
- authenticating a client hosting one or more of the applications with the cloud IO broker before accepting registration of these one or more applications for content change notification.

Indeed, the cloud IO broker may be implemented with an authentication function allowing to decide whether or not to accept a request for change notification from a client device hosting an application that requires change notification. For instance, a basic HTTP authentication mechanism can be used between the client device and cloud IO broker to establish a trusted connection for the change notification.

According to a further optional aspect defined by claim 3, the second content change notification may be multicasted via HTTP WebSockets or HTTP REST calls.

Indeed, client devices connected to a cloud storage system via the HyperText Transfer Protocol (HTTP), can receive content change notifications in real time by use of HTTP WebSockets or HTTP REST (REpresentational State Transfer) calls. The content changes that happen in the cloud storage system and that are reported by the cloud IO agent, can be propagated as CMUD (create, move, update or delete) events over HTTP to the different applications that are connected at that moment and that have registered for the content change notification service. In case the client doesn't support HTTP WebSockets which are part of the HTML 5 standard specification, HTTP REST calls can be used to propagate the CMUD events.

According to yet another optional aspect defined by claim 4, the applications may register for content change notification with the cloud IO broker via HTTP POST requests or HTTP WebSocket requests.

Indeed, client devices connected to a cloud storage system via HTTP, can subscribe to the content change notification service according to the present invention using an HTTP WebSocket request or an HTTP Post request. The HTTP WebSocket request or HTTP POST request must specify the file, object or directory path, the client ID and the client endpoint. In case the client doesn't support HTTP WebSockets which are part of the HTML 5 standard specification, an HTTP POST request can be used to register for the content change notification service.

In addition to a method for notification of content changes as defined by claim 1, the present invention relates to a cloud IO broker as defined by claim 5, the cloud IO broker being adapted to tunnel cloud IO events to/from different client devices in a cloud storage system wherein different applications share same content, the cloud IO broker comprising:
- an interface configured to receive from applications running on the client devices a content change notification request comprising an identification of respective content for which the applications require content change notification;
- a register for registering the applications that require content change notification together with the identification of respective content for which the applications require content change notification;
- an interface configured to inform a cloud IO agent responsible for monitoring content changes in the cloud storage system about content for which the applications registered with the cloud IO broker require content change notification;
- an interface for receiving from the cloud IO agent a first content change notification upon each change in the cloud storage system of a content item that forms part of the content for which the applications require content change notification;
- a processor configured to identify in the register applications registered for content change notification for content comprising the content item; and
- an interface configured for multicasting a second content change notification from the cloud IO broker to all applications registered for content change notification for content comprising the content item.

Furthermore, the present invention relates to a corresponding cloud IO agent as defined by claim 6, the cloud IO agent being adapted for notification of content changes across different applications that share same content in a cloud storage system, the cloud IO agent comprising:
- an interface for receiving from a cloud IO broker information identifying content for which applications registered with the cloud IO broker require content change notification;
- means for monitoring content changes in the cloud storage system; and
- an interface for sending upon each change of a content item in the cloud storage system a first content change notification from the cloud IO agent to each cloud IO broker that requested content change notification for content comprising said content item, to thereby enable the cloud IO broker to identify applications registered for content change notification for content comprising the content item, and to multicast a second content change notification from the cloud IO broker to all applications registered for content change notification for content comprising the content item.

### Brief Description of the Drawings

Fig. 1 is a block diagram showing a cloud storage system wherein an embodiment of the method for content change notification according to the present invention is implemented;

Fig. 2A and 2B illustrate the message flow for content change notification subscription by two applications in an embodiment of the content change notification method according to the present invention; and

Fig. 3A, 3B and 3C illustrate the message flow upon a content change in an embodiment of the content change notification method according to the present invention.

### Detailed Description of Embodiment(s)

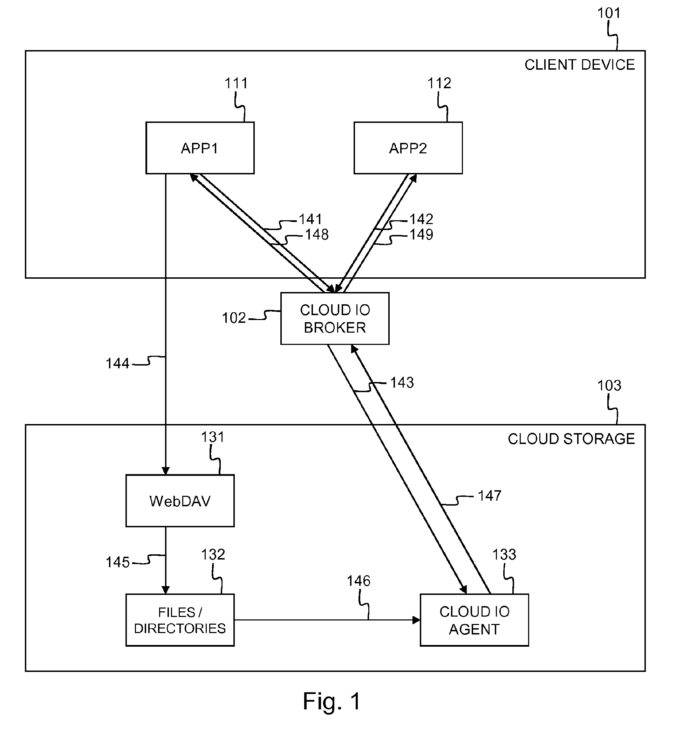

Fig. 1 shows a block diagram with one client device 101 that has two different applications, APP1 or 111 and APP2 or 112, that are connected to a backend cloud storage system 103. The two applications 111 and 112 share content stored in the cloud storage system 103 and desire to have at each point in time the same presentation of the shared cloud content. The applications 111 and 112 therefore shall subscribe to a content change notification service as will be explained in the following paragraphs. Obviously, there is no limit in the number of devices and/or the number of applications that can subscribe to such service.

Fig. 1 further shows a cloud IO broker 102. This cloud IO broker 102 is a server that uses WebSockets or HTTP REST calls to tunnel cloud IO events to the different applications that subscribe for the notification service.

The cloud applications 111 and 112 are client software applications or clients that subscribe with cloud IO broker 102 for the cloud IO event notification. A client 111 or 112 can subscribe to the cloud IO event notification either using an HTTP POST request or a WebSocket request. This request is respectively denoted 141 and 142 for the clients 111 and 112 in Fig. 1, and typically comprises the following data:
- path: the client specifies a root directory path in the WebDAV format, e.g. "http://user@host.tld/path/" for the root directory wherein all changes need to be notified. As a result, all IO events on directories and files that belong to this root directory, including its subdirectories, will be forwarded to the client;
- clientID: the client includes a unique identification of the client in its registration request; and
- clientendpoint: a client must provide a server endpoint to which the cloud IO broker 102 must send the cloud IO events.

The JavaScript Object Notation or JSON format of the request message 141 for WebSockets is as follows:

```
      {
      "path": "http://user@host.tld/path/",
      "clientID": 1336653252,
      "clientendpoint": the WebSocket or the REST client endpoint
      }
```

As a result of its registration for the cloud IO event notification service, a client shall receive cloud IO events, 148 and 149 in Fig. 1. Such a cloud IO event defines a file or directory change by means of a CMUD (create, move, update or delete operation) that happened in the cloud storage system 103. A cloud IO event like 148 and 149 comprises the following data:
- path: a pointer to the file or directory that changed in the WebDAV format, e.g. "http://user@host.tld/path/";
- time: an indication of the epoch time, i.e. the time of the content change;
- type: an indication of the type of content change, i.e. either a create, move, update, copy or delete operation;
- frompath: in case that a file is moved, the frompath will point to the file location in the cloud storage system prior to the move, otherwise the frompath will be empty;
- MD5: an MD5 checksum; and
- size: an indication of the size of the file in bytes in case the content change was a file change.

The JavaScript Object Notation or JSON format of the IO event 148 is as follows:

```
      {
      "path": "http://user@host.tld/path/file1.ext",
      "time": 1336653252,
      "type": "create",
      "frompath":"",
      "MD5": 5fe2e15a2e6a44b288116c7d8f2a8c3e,
      "size": 10271,
      }
```

The cloud IO broker 102 decides whether or not to accept client requests 141 and 142. Thereto, a basic HTTP authentication can be used between the clients 111, 112 and the cloud IO broker 102 to establish trusted connection.

In Fig. 1, clients APP1 or 111] and APP2 or 112 running on client device 101 register for the cloud IO event notification service with cloud IO broker 102 via respective requests 141 and 142. Cloud IO broker 102 informs cloud IO agent 133 in cloud storage system 103 about the files and directories for which it needs content change event notification via the message 143. Further in Fig. 1, the client application 111 changes the file content in the cloud using the WebDAV protocol, as is indicated by arrow 144. A WebDAV server 131 in the cloud storage system 103 is connected to the files/directories cloud store 132 and implements the file/directory changes therein as is indicated by 145 in Fig. 1. Thereupon, cloud IO agent 133 is notified of the changes in the backend cloud store 132 via message 146. The cloud IO agent 133 compares the files and directories that have changed against the files and directories that were registered in message 143. In case that some of the files or directories that have changed according to message 146 were registered by clients 111 or 112 for content change notification, the cloud IO agent 133 will notify the cloud IO broker 102 about these changes. This is done via cloud IO event message 147. At last, the cloud IO broker 102 will multicast the content changes as cloud IO events 148 and 149 to both applications 111 and 112 via HTTP WebSocket or HTTP REST calls.

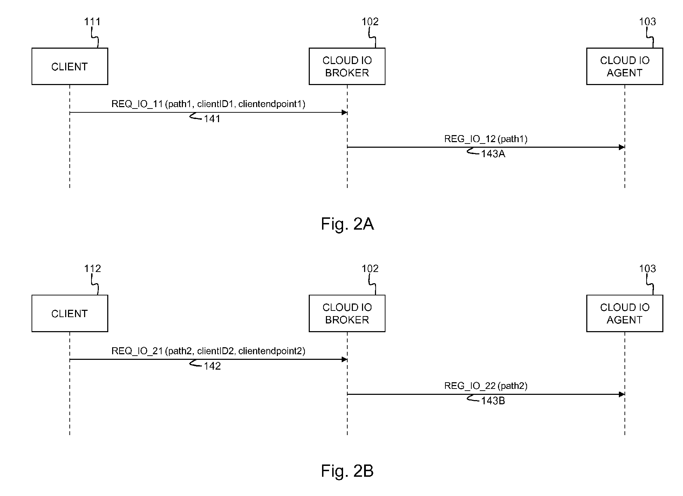

Fig. 2A and Fig. 2B show in more detail the message flow to register clients 111 and 112 for content change notification in the system of Fig. 1. To the extent possible, equal reference numbers are used to denote the same blocks and messages across the different figures. Client applications can subscribe to the cloud IO event notification service either using HTTP POST or HTTP WebSocket requests. In Fig. 2A and Fig. 2B, client applications 111 and 112 subscribe for the service by respectively sending the request messages REQ_IO_11 or 141 and REQ_IQ_21 or 142 to the cloud IO broker 102. Through these request messages 141 and 142, client applications 111 and 112 request to be notified on the cloud IO events changing specific content. The following data is encoded in the request 141 sent from client 111 to cloud IO broker 102: path1, clientID1 and clientendpoint1. Herein, path1 is a path in the WebDAV format pointing to the content for which client 111 requests change notification, e.g. "http://user@host.tld/path/". As a result of the registration, all IO events on directories and/or files that belong to path1 or any directories beneath path1 will be forwarded to client 111 by the cloud IO broker 102. Similarly, the following data is encoded in the request 142 sent from client 112 to cloud IO broker 102: path2, clientID2 and clientendpoint2. Herein, path2 is a path in the WebDAV format pointing to the content for which client 112 requests change notification, e.g. "http://user@host.tld/path2/". As a result of the registration, all IO events on directories and/or files that belong to path2 or any directories beneath path2 will be forwarded to client 112 by the cloud IO broker 102. Cloud IO broker 102 informs the cloud IO agent 103 about the files and paths for which it needs content change notification. In Fig. 2A and Fig. 2B this is done for path1 and path2 via the registration messages REG_IO_12 or 143A and REG_IO_22 or 143B. Obviously, registering the files and directories for which content change notification is required may alternatively be combined into a single message sent from cloud IO broker 102 to cloud IO agent 103, as is indicated by 143 in Fig. 1.

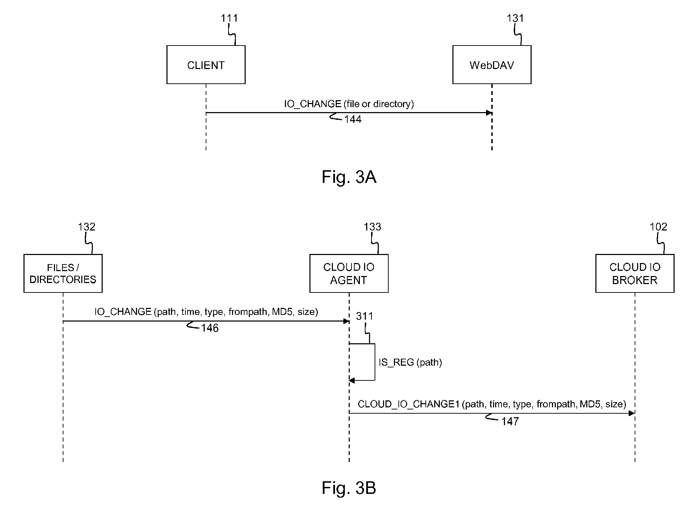

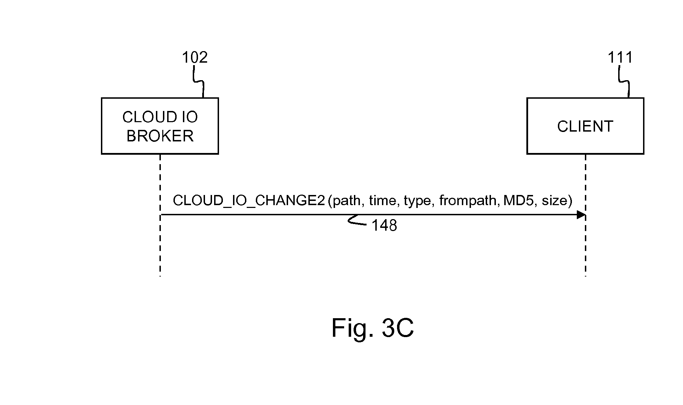

Fig. 3A, Fig. 3B and Fig. 3C show in more detail the cloud IO event handling message flow in the system of Fig. 1 in case of a content change. In Fig. 3A, the client 111 is responsible for the content change on the file or directory stored in the cloud store 132. The client 111 thereto sends IO_CHANGE message 144 to the WebDAV server 131 and specifies therein which file or directory has to be changed. This change will be reported by cloud store 132 to cloud IO agent 133 via IO_CHANGE message 146. The following data is encoded in the IO_CHANGE message 146 sent to cloud IO agent 133: path, time, type, frompath, MD5 and size. Herein, path is a path in the WebDAV format pointing to the content that was changed, e.g. "http://user@host.tld/path/", time specifies the time of the content change, type indicates the type of content change, i.e. either a create, move, update, copy or delete operation, frompath points to the file location in the cloud storage system prior to the move in case that a file is moved or remains empty otherwise, MD5 represents a checksum, and size specifies the size of the changed file in bytes in case the content change was a file change. In case that the content change was on a file or directory that was registered with cloud IO agent through the messages 143A or 143B, which will be checked by cloud IO agent 133 through a call to function IS_REG 311 in Fig. 3B, the detected cloud IO change will be forwarded through CLOUD_IO_CHANGE1 message 147 towards the cloud IO broker 102. The cloud IO broker 102 will check which client applications are registered for change notification on that file or directory. As a result, it will forward the change as CLOUD_IO_CHANGE2 message 148 to client application 111. A similar message 149 will be forwarded to client application 112 assuming that the content change has taken place on a file or directory that belongs to path2.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for notification of content changes across different applications that share same content in a cloud storage system, said method comprising:
- registering at a cloud IO broker applications that require content change notification together with an identification of respective content for which said applications require content change notification;
- said cloud IO broker informing a cloud IO agent about content for which applications registered with said cloud IO broker require content change notification;
- said cloud IO agent monitoring content changes in said cloud storage system; and
upon each change of a content item in said cloud storage system:
- sending a first content change notification from said cloud IO agent to each cloud IO broker that requested content change notification for content comprising said content item;
- identifying at said cloud IO broker applications registered for content change notification for said content item; and
- multicasting a second content change notification from said cloud IO broker to all applications registered for content change notification for content comprising said content item.

2. A method for notification of content changes according to claim 1, further comprising:
- authenticating a client hosting one or more of said applications with said cloud IO broker before accepting registration of said one or more applications for content change notification.

3. A method for notification of content changes according to claim 1, wherein said second content change notification is multicasted via HTTP WebSockets or HTTP REST calls.

4. A method for notification of content changes according to claim 1, wherein said applications register for content change notification with said cloud IO broker via HTTP POST requests or HTTP WebSocket requests.

5. A cloud IO broker adapted to tunnel cloud IO events to/from different client devices in a cloud storage system wherein different applications share same content, said cloud IO broker comprising:
- an interface configured to receive from applications running on said client devices a content change notification request comprising an identification of respective content for which said applications require content change notification;
- a register for registering said applications that require content change notification together with said identification of respective content for which said applications require content change notification;
- an interface configured to inform a cloud IO agent responsible for monitoring content changes in said cloud storage system about content for which said applications registered with said cloud IO broker require content change notification;
- an interface for receiving from said cloud IO agent a first content change notification upon each change in said cloud storage system of a content item that forms part of said content for which said applications require content change notification;
- a processor configured to identify in said register applications registered for content change notification for content comprising said content item; and
- an interface configured for multicasting a second content change notification from said cloud IO broker to all applications registered for content change notification for content comprising said content item.

6. A cloud IO agent adapted for notification of content changes across different applications that share same content in a cloud storage system, said cloud IO agent comprising:
- an interface for receiving from a cloud IO broker information identifying content for which applications registered with said cloud IO broker require content change notification;
- means for monitoring content changes in said cloud storage system; and
- an interface for sending upon each change of a content item in said cloud storage system a first content change notification from said cloud IO agent to each cloud IO broker that requested content change notification for content comprising said content item, to thereby enable said cloud IO broker to identify applications registered for content change notification for content comprising said content item, and to multicast a second content change notification from said cloud IO broker to all applications registered for content change notification for content comprising said content item.
